# EUROPÄISCHE PATENTANMELDUNG

(11) **EP 2 292 703 A1**
(43) Veröffentlichungstag der Anmeldung: **09.03.2011**
(21) Anmeldenummer: 10009334.3
(22) Anmeldetag: 08.09.2010
(51) Int. Cl.: C09D 7/00

(54) **Verfahren zur Herstellung von Dispersionen mit nanoskaligen Siliziumdioxid-Partikeln aus pyrogenen Kieselsäuren**

(30) Priorität: 08.09.2009 DE 102009040488
(71) Anmelder: Cetelon Lackfabrik GmbH, 71254 Ditzingen (DE)
(72) Erfinder: Krannich, Hartmut, 86556 Kühbach (DE); Mehnert, Reiner Prof. Dr., 04416 Markkleeberg (DE); Bauer, Frank Dr., 04318 Leipzig (DE)
(74) Vertreter: Winter, Martina

(57) **Zusammenfassung**

Die vorliegende Erfindung betrifft ein Verfahren zur Herstellung einer Dispersion mit nanoskaligen Siliziumdioxid-Partikeln aus pyrogenen Kieselsäuren in einem Lackbindemittel mit den folgenden Verfahrensschritten: (1) Vorlegen mindestens einer oligomeren und/oder polymeren Siloxanverbindung in mindestens einem flüssigen Lackbindemittel mit mindestens einem Reaktivverdünner, (2) Eindispergieren mindestens einer pyrogenen Kieselsäure unter Rühren, (3) Rühren der Dispersion bis zum Erreichen einer konstanten Viskosität.

## Beschreibung

Die vorliegende Erfindung betrifft ein Verfahren zur Herstellung von Dispersionen mit nanoskaligen Siliziumdioxid-Partikeln aus pyrogenen Kieselsäuren.

Als pyrogene Kieselsäuren werden amorphe, hochreine und hochdisperse Siliziumdioxid-Partikel verstanden, die durch eine Flammenhydrolyse hergestellt werden. Dabei wird Siliziumtetrachlorid in einer Knallgasflamme, das heißt, in einer Sauerstoff-Wasserstoff-Flamme umgesetzt. Im Verbrennungsprozess bilden sich zunächst kugelförmige Primärpartikel, die sich im weiteren Verlauf des Herstellungsverfahrens zu amorphen, nanoskaligen Aggregaten und schließlich zu mikroskaligen Agglomeraten zusammenschließen.

Im Rahmen der vorliegenden Anmeldung soll der Begriff "nanoskalig" Partikel und Aggregate bezeichnen, deren mittlerer Durchmesser im Nanometerbereich liegt. Der Begriff "mikroskalig" soll Partikel und Agglomerate bezeichnen, deren mittlerer Durchmesser im Mikrometerbereich liegt. Der Begriff "Aggregate" soll flächig oder dreidimensional zusammengewachsene Primärpartikel bezeichnen, die nicht weiter abbaubar, also nicht wieder in die Primärpartikel zerlegbar sind. Der Begriff "Agglomerate" soll punktförmig lose aneinander liegende, durch schwache physikalische Kräfte (bspw. van-der-Waals-Kräfte) verbundene Aggregate mit dreidimensionaler Struktur bezeichnen.

Zur Herstellung von Dispersionen können pyrogene Kieselsäure in Lösemittel eingebracht werden. Bei diesem Eindispergieren beobachtet man eine starke Erhöhung der Viskosität. Dies liegt daran, dass die Aggregate in der Dispersion ein dreidimensionales Netzwerk ausbilden und aufgrund ihrer großen Oberflächen und deren Polarität zu einer effizienten Wechselwirkung selbst mit unpolaren Flüssigkeiten führen. Auf diese Weise entstehen vergleichsweise starre mikroskalige dreidimensionale Agglomeratstrukturen, welche die Beweglichkeit des Lösemittels erheblich einschränken. Außerdem wird an den Agglomeratstrukturen Licht so gestreut, dass die Dispersion stark getrübt wird.

Die Viskosität von Dispersionen, die pyrogene Kieselsäuren als Feststoff enthalten, kann unter Scherbelastung in technisch üblichen Scheibenrührern (Dissolvern) zwar gesenkt werden, jedoch nur bis zu einem gewissen Grenzwert. Die starren dreidimensionalen Agglomeratstrukturen werden durch die Scherkräfte nur teilweise aufgehoben, ein vollständiges Aufbrechen der Agglomerate kann auf diese Weise nicht erreicht werden. Nur ein Teil der Agglomerate kann in Aggregate aufgebrochen werden, und diese Aggregate sind nur teilweise gegeneinander beweglich.

Die deutsche Patentanmeldung DE 10 2006 050 748 A1 beschreibt ein Verfahren zur Vermahlung von mikroskaligen Partikeln unter Zusatz von Dispergieradditiven und eines Lösemittels in einer Hochdruckmühle. Unter einen Druck von 500 bis 1000 bar können die mikroskaligen Partikel auf diese Weise in nanoskalige Fragmente zerlegt werden. Diese Fragmente werden als anorganischer Füllstoff in Lackbindemitteln verwendet.

Die deutsche Patentanmeldung DE 198 11 790 A1 offenbart ein Düsenstrahl-Dispergierverfahren, mit dem feststoffhaltige Dispersionen zur Verwendung in transparenten Lackbindemitteln hergestellt werden können.

Das deutsche Patent 10 2006 039 638 B3 beschreibt nanoskalige Komposite und ein Verfahren zu ihrer Herstellung. Dabei werden nanoskalige Füllstoffe in einem organischen Bindemittel unter Zusatz einer Base modifiziert. Es wird jedoch nur eine teilweise Deagglomeration erreicht. Die dort ermittelten Partikelgrößen von 150nm bis 243nm lassen darauf schließen, dass hochtransparente Dispersionen nicht hergestellt werden konnten und die rheologischen Eigenschaften der Dispersion nicht ausreichend verbessert wurden.

Das europäische Patent EP 1 123 354 B1 offenbart anorganische Partikel, die unter Zusatz einer Säure modifiziert werden. Zur Herstellung dieser modifizierten Partikel werden eine pyrogene Kieselsäure und ein Silan in einem einstufigen Verfahren alternierend in ein organisches Lösemittel eingetragen und unter Zusatz eines sauren Katalysators intensiv gerührt. Dabei entstehen monofunktionelle Siloxane. Als Nebenprodukte entstehen ferner Methanol und Methylacrylat. Daher kommt die chemische Reaktion nach mehreren Stunden zum Stillstand, so dass die Deagglomeration auch hier nicht vollständig ist. Dies kann bspw. durch das dilatante Verhalten der resultierenden Dispersion bei Scherung nachgewiesen werden. Im Ergebnis führt dies bei gängigen Applikationsverfahren von diese Dispersionen enthaltenden Lackbindemitteln, wie Walzenauftrag oder Spritzen zu technischen Schwierigkeiten wie ungleichmäßigem Auftrag und zur Abhängigkeit des Auftragsgewichts bei der Scherung.

Die Aufgabe der Erfindung besteht darin, ein Verfahren zur Herstellung von Dispersionen mit nanoskaligen Siliziumdioxid-Partikeln aus pyrogenen Kieselsäuren so weiterzubilden, dass möglichst transparente Dispersionen mit niedriger Viskosität und im Wesentlichem Newton'schem Verhalten bei Scherung erhalten werden, das heißt, die Schubspannung ist proportional zur Schergeschwindigkeit.

Die Lösung besteht in einem Verfahren mit den Merkmalen des Patentanspruchs 1. Erfindungsgemäß ist vorgesehen, dass zunächst in mindestens einem flüssigen Lackbindemittel mit mindestens einem Reaktiwerdünner mindestens eine polyfunktionelle Siloxanverbindung vorgelegt wird, dass anschließend mindestens eine pyrogene Kieselsäure unter Rühren eindispergiert wird und dass die resultierende Dispersion bis zum Erreichen einer konstanten Viskosität gerührt wird.

Das erfindungsgemäße Verfahren resultiert in hochtransparenten Dispersionen nanoskaliger Siliziumdioxid-Partikel mit hohen Siliziumdioxid-Füllgraden und vorteilhaften rheologischen Eigenschaften, insbesondere niedrige Viskosität und annähernd Newton'sches Verhalten. Ferner wird aufgrund des erfindungsgemäßen Verfahrens die Entstehung von Methanol und Methylacrylaten zumindest stark reduziert.

Es hat sich überraschend herausgestellt, dass Dispersionen von nanoskaligen Siliziumdioxid-Partikeln mit dem erfindungsgemäßen Verfahren sehr gut darstellbar sind, da hierbei die bei der Herstellung von pyrogenen Kieselsäuren entstehenden mikroskaligen Agglomerate durch Oberflächenkontakt mit polyfunktionellen Siloxanverbindungen dauerhaft in isolierte nanoskalige Aggregate mit Partikelgrößen unter 100nm vereinzelt werden. Diese polyfunktionellen Siloxanverbindungen sind ihrerseits Kondensationsprodukte von funktionalisierten Alkoxysilanen. In Verbindung mit mechanischer Scherung sind diese Kondensationsprodukte der funktionalisierten Alkoxysilane in der Lage, die durch schwache physikalische Wechselwirkungen verbundenen mikroskaligen Siliziumdioxid-Agglomerate dauerhaft zu vereinzeln. Dabei werden die polyfunktionellen Siloxanverbindungen entweder über eine Reaktion mit Silanol-Gruppen, d.h. Hydroxyl-Gruppen chemisch an die Oberfläche der nanoskaligen Siliziumdioxid-Partikel gebunden und/oder durch polare Wechselwirkungen mit der Partikeloberfläche physikalisch an die Partikel adsorbiert. Die relativ großen chemisch angebundenen und/oder adsorptiv angelagerten polyfunktionellen Siloxanverbindungen sprengen die durch schwache Wechselwirkungen verbundenen Agglomerate. Gleichzeitig wird durch den erfindungsgemäßen Einsatz von vergleichsweise voluminösen polyfunktionellen Siloxanverbindungen erreicht, dass ggf. noch an der Oberfläche der nanoskaligen Siliziumdioxid-Partikel vorhandene freie Hydroxyl-Gruppen geometrisch abgeschirmt werden.

Bereits unter mäßiger Scherung, bspw. mittels eines Scheibenrührers (Dissolvers) oder einer Perlmühle, entstehen nach kurzer Einwirkungszeit der Siloxanverbindungen aus zunächst trüben Dispersionen hochtransparente Dispersionen mit nanoskaligen Siliziumdioxid-Partikeln. Die Siloxanverbindungen, die sich an der Oberfläche der nanoskaligen Siliziumdioxid-Partikel adsorptiv anlagern und/oder chemisch angebunden werden, verhindern eine Reagglomeration der durch Scherung erzeugten nanoskaligen Siliziumdioxid-Partikel.

Erfindungsgemäß werden die polyfunktionellen Siloxanverbindungen in mindestens einem, mindestens einen Reaktiwerdünner enthaltenden, flüssigen Lackbindemittel vorgelegt. Anschließend werden die polyfunktionellen Siloxanverbindungen mit den mikroskaligen Siliziumdioxid-Agglomeraten zu den erfindungsgemäßen Dispersionen umgesetzt. Daher entstehen bei dieser Reaktion bedeutend weniger Alkohole und Alkylacrylate als aus dem Stand der Technik bekannt.

Das erfindungsgemäße Verfahren bewirkt also eine Deagglomeration mikroskaliger Siliziumdioxid-Agglomerate sowie eine Organophilierung der Oberfläche der gebildeten nanoskaligen Siliziumdioxid-Partikel, unterbindet eine Reagglomeration der gebildeten nanoskaligen Siliziumdioxid-Partikel und setzt weniger Alkohole und Alkylacrylate frei.

Die aus dem erfindungsgemäßen Verfahren resultierenden Dispersionen mit nanoskaligen Siliziumdioxid-Partikeln weisen eine Viskosität auf, die nur wenig höher ist als die Viskosität des ungefüllten, organischen Lösemittels. Ferner weisen sie bei mittlerer und hoher Scherung, wie sie bspw. bei Walz- und Spritzapplikation auftritt, eine im Wesentlichen konstante Viskosität auf und zeigen damit im Wesentlichen ein Newton'sches Verhalten.

Vorteilhafte Weiterbildungen ergeben sich aus den Unteransprüchen.

Bevorzugt werden zunächst ein oder mehrere funktionalisierte Alkoxysilane durch sauer oder basisch katalysierte Kondensation zu der mindestens einen polyfunktionellen Siloxanverbindungen umgesetzt. Anschließend werden die bei der Kondensation der Alkoxysilane entstehenden Alkohole werden vor der Zugabe der Siliziumdioxid-Partikel entfernt, bspw. mit Luft ausgetrieben, so dass die Umsetzung der mindestens einen polyfunktionellen Siloxanverbindung mit der mindestens einen pyrogenen Kieselsäure im Wesentlichen störungsfrei abläuft.

Als für das erfindungsgemäße Verfahren besonders geeignet haben sich Oligosiloxane mit Molekulargewichten von 500 bis 7.000 herausgestellt. Diese können aus monomeren Alkoxysilanen hergestellt oder käuflich erworben werden. Geeignete polyfunktionelle Siloxanverbindungen sind bspw. Produkte vom Typ Dynasylan des Herstellers Evonik, insbesondere Dynasylan 6490 und Dynasylan 6498.

Bei der Oligomerisierung monomerer Alkoxysilane entstehen bevorzugt ringförmige Oligosiloxane mit Durchmessern von 1 nm bis 3nm. Die Kondensationsreaktion kann so geführt werden (abhängig von Auswahl und Konzentration des Katalysators und Menge des zugegebenen Wassers), dass die Kondensation nicht vollständig abläuft und oligomere und/oder polymere Siloxanverbindungen entstehen, die noch Hydroxylgruppen tragen. Der Kondensationsgrad der oligomeren bzw. polymeren Siloxanverbindungen kann durch die Messung der Menge des entstehenden Alkohols auf einfache Weise kontrolliert werden. Der Alkohol wird anschließend entfernt, bspw. mit Luft ausgeblasen.

Die polyfunktionellen Siloxanverbindungen sind Kondensationsprodukte von funktionalisierten Alkoxysilanen, wobei Kondensationsprodukte der allgemeinen Formel (I)

(RSiO_{3/2})ₓ (RSiO(OR'))_{y}(OR')_{z} (I)

mit x = 0 - 100, y = 0 - 100 und z = 1, 2,
wobei R eine funktionelle Gruppe ist,
wobei R' Wasserstoff oder eine gesättigte oder ungesättigte, aromatische oder aliphatische Alkylgruppe ist,
erhalten werden.

(RSiO_{3/2})ₓ bezeichnet eine voll kondensierte Struktur, (RSiO(OR'))_{y}(OR')_{z} eine teilkondensierte Struktur und (OR')_{z} eine Endgruppe.

Geeignete Alkoxysilane sind bspw. organofunktionelle Alkoxysilane, insbesondere Trialkoxysilane wie Vinyltrimethoxysilan, Vinyltriethoxysilan, Methacryloxypropyltrimethoxysilan, Propyltrimethoxysilan, Aminopropyltrimethoxysilan, Glycidyloxypropyltrimethoxysilan.

Geeignete Verbindungen sind bspw. oligomere Epoxyacrylate vom Typ Ebecryl des Herstellers Cytec *(bitte weitere Verbindungstypen und Hersteller spezifizieren).* Geeignete Reaktivverdünner sind insbesondere mono-, bi- und trifunktionelle Acrylate für die UV-Härtung, wie bspw. Isobornylacrylat (IBOA), Hexandioldiacrylat (HDDA), Tripropylenglycoldiacrylat (TPGDA), Trimethylolpropantriacrylat (TMPTA), Pentaerythritoltetraacrylat (PETIA) und andere *(bitte ggf. weitere Verbindungstypen für andere Härtungsmechanismen und ggf. Hersteller spezifizieren).*

Als organische Lösemittel bzw. Bindemittel eignen sich insbesondere monomere und/oder oligomere Acrylate und/oder Methacrylate, insbesondere oligomere Urethan-, Polyester- und Epoxyacrylate. Geeignete Verbindungen sind bspw. oligomere Acrylate vom Typ Ebecryl des Herstellers Cytec (Cytec Surface Specialties SA/NV, Europe, Erasmus Office Park, Square Marie Curie 11, B-1070 Brussels, Belgium), vom Typ Sartomer oder Craynor des Herstellers Sartomer (SARTOMER Division of CRAY VALLEY, La Defense 2-12, place de l'Iris, F-92062 - PARIS), vom Typ Desmolux des Herstellers Bayer MaterialScience, (Kaiser-Wilhelm-Allee, 51368 Leverkusen).

Geeignete Reaktivverdünner sind insbesondere mono-, bi- und multifunktionelle Acrylate für die UV-Härtung, wie bspw. Isobornylacrylat (IBOA), Hexandioldiacrylat (HDDA), Tripropylenglycoldiacrylat (TPGDA), Trimethylolpropantriacrylat (TMPTA), Pentaerythritoltetraacrylat (PETIA), Tetrahydrofurfurylacrylat und Polyethylen(400)glykoldiacrylat.

Zur Kondensation der Alkoxysilane kann Wasser in Konzentrationen von bspw. 0,1 bis 1,0 Gew.-% zugesetzt werden, insbesondere in Form einer wässrigen Lösung eines Katalysators. Bevorzugte Katalysatoren sind Dicarbonsäuren und Carbonsäureanhydride wie bspw. Maleinsäureanhydrid.

Ausführungsbeispiele der vorliegenden Erfindung werden im Folgenden anhand der beigefügten Zeichnungen näher beschrieben. Es zeigen in schematischer, nicht maßstabsgetreuer Darstellung:
- Figur 1: eine auf quantenchemische Rechnungen basierende modellhafte Darstellung eines nanoskaligen Siliziumdioxid-Partikels mit polyfunktionellen Siloxanver- bindungen;
- Figur 2: MALDI-TOF-Spektren zweier oligomerer bzw. polymerer Siloxanverbindungen zur Herstellung der erfindungsgemäßen Dispersionen;
- Figur 3: ein Viskositätsdiagramm einer erfindungsgemäßen Dispersion, die als Walzlack eingesetzt wird;
- Figur 4: die Partikelgrößenverteilung einer erfindungsgemäßen Dispersion.

### Beispiel 1

### Oligomerisierung monomerer Alkoxysilane

In einem ersten Ansatz (Kondensationsansatz 1) wurden 160g Polyesteracrylat vom Typ Ebecryl 830 und 540g Trimethylolethoxytriacrylat (TMPEOTA) vom Typ Sartomer 454 mit 41g Vinyltriethoxysilan (VTEO), 25g Wasser 19g Maleinsäureanhydrid und 0,1g Hydroxyanisol als Stabilisator bei 60°C gerührt, bis die Kondensationsreaktion vollständig abgelaufen war.

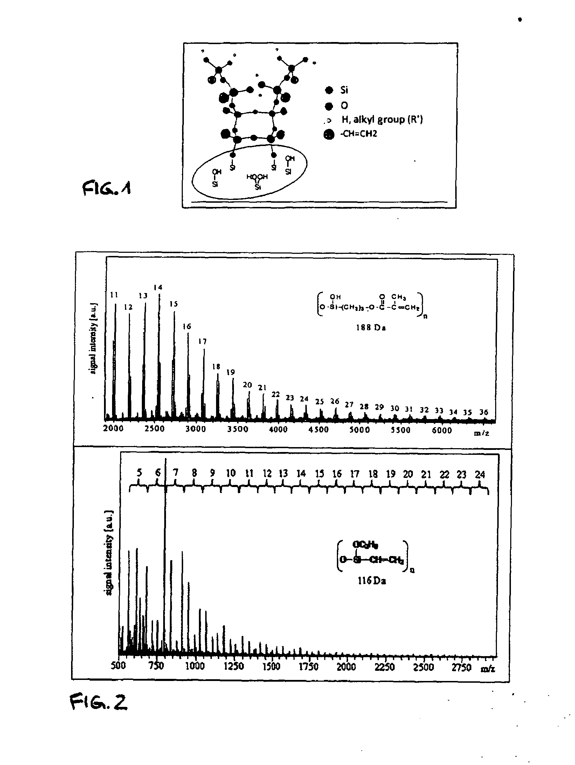

In einem zweiten Ansatz (Kondensationsansatz 2) wurden 366g Urethanacrylat vom Typ Ebecryl 5129, 387g Hexandioldiacrylat vom Typ Sartomer 238, 60g Methacryloxypropyltrimethoxisilan (MEMO), 35g Wasser, 28g Maleinsäureanhydrid und 0,1g Hydroxyanisol als Stabilisator bei 60°C gerührt, bis die Kondensationsreaktion vollständig abgelaufen war. Danach wurden die bei der Kondensationsreaktion entstandenen Alkohole (Methanol, Ethanol) sowie eventuell als Nebenprodukt entstandene Methyl- und Ethylacrylate mit Luft ausgeblasen. Es entstanden polyfunktionelle Siloxanverbindungen mit Dimensionen von 1 nm bis 3nm, wie sie in Figur 1 schematisch dargestellt sind.

Die resultierenden Kondensationsprodukte wurden mittels matrixunterstützter Laser-Desorptions-Ionisation mit Flugzeitmassenspektrometer-Detektion (MALDI-TOF) analysiert. Die MALDI-TOF-Spektren (siehe Figur 2) zeigten Molekulargewichte zwischen 500 und 7.000 sowie einen Oligomerisierungsgrad mit Maxima bei 6 bis 7 monomeren Struktureinheiten für das Oligomere von Vinyltriethoxysilan und 11 bis 15 monomeren Struktureinheiten für das Oligomere von Methacryloxypropyltrimethoxisilan.

Kondensationsansatz 1 und Kondensationsansatz 2 wurden jeweils dreigeteilt. In die Teilansätze von Kondensationsansatz 1 bzw. Kondensationsansatz 2 wurden jeweils 50g pyrogene Kieselsäure vom Typ Aerosil OX 50, Aerosil 200 und Aerosil 380 (Hersteller: Evonik AG) unter Rühren eingetragen. Beim Eintragen erhöhte sich die Viskosität der Dispersion zunächst stark. Außerdem wurde die Lösung trüb. Die Temperatur wurde zwischen 60°C und 70°C gehalten.

Das Einsetzen des Deagglomerationsprozesses bewirkte jedoch einen raschen Abfall der Viskosität. Dieser Prozess lässt sich bspw. über die elektrische Leistungsaufnahme des Scheibenrührers (Dissolvers) kontrollieren, wenn die Temperatur der Dispersion durch äußere Maßnahmen konstant gehalten wird. Die Dispersion wurde solange gerührt, bis eine konstant niedrige Viskosität erreicht und die Trübung verschwunden war. Danach wurden Methanol bzw. Ethanol und Methylacrylat bzw. Ethylacrylat durch intensives Ausblasen mit Luft entfernt, bis die Restkonzentration der Alkohole unter 10ppm und die Restkonzentration der Alkylacrylate unter 1 ppm lag. Anschließend wird die Dispersion in einer Perlmühle so lange gemahlen, bis eine konstant niedrige Viskosität erreicht war.

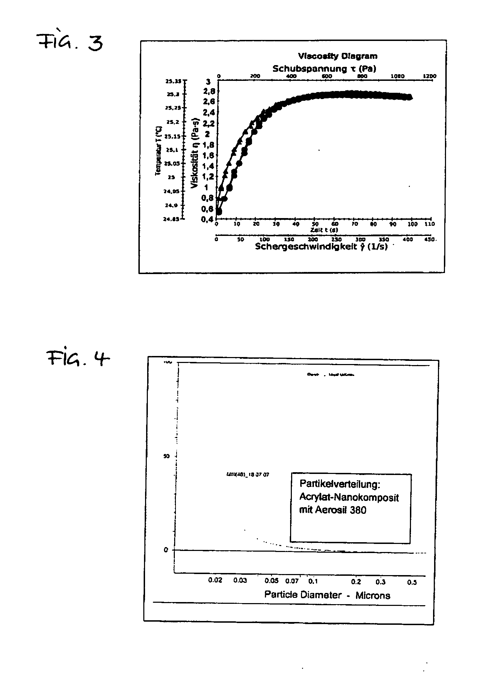

Mit Hilfe des erfindungsgemäßen Verfahrens wurden somit Dispersionen von nanoskaligen Siliziumdioxid-Partikeln und Gemischen aus oligomeren und monomeren Acrylaten hergestellt. Figur 3 zeigt das Viskositätsdiagramm der aus dem Kondensationsansatz 2 erhaltenen Dispersion. Bei Schergeschwindigkeiten von 150s⁻¹ bis 400s⁻¹, wie sie typisch für eine Walzenapplikation sind, bleibt die Viskosität konstant. Die erfindungsgemäße Dispersion ist damit einfach applizierbar.

### Beispiel 2

In einem Ansatz wurden zur Herstellung einer Acrylatmischung 99g Urethanacrylat vom Typ Ebecryl 5129, 249g Urethanacrylat vom Typ Ebecryl 264, 350g Hexandioldiacrylat vom Typ Sartomer 238, 50g teilkondensiertes Vinyltrimethoxysilan vom Typ DS 6490 (Evonik AG), 20g Wasser, 8g Maleinsäureanhydrid und 0,1g Hydroyxanisol als Stabilisator bei 60° gerührt.

Es wurde wie in Beispiel 1 verfahren. Allerdings wurde kein Alkoxysilan kondensiert, sondern es wurden 50g eines kommerziell erhältlichen, teilkondensierten Vinyltrimethoxysilans vom Typ DS 6490 (Evonik AG) in der Acrylatmischung vorgelegt. Die Mischung wurde während der gesamten Umsetzung bei einer Temperatur von 60°C gehalten. Der Ansatz wurde wieder dreigeteilt, und in jeden Teil wurden die pulverförmigen pyrogenen Kieselsäuren aus Beispiel 1 unter Rühren eingetragen. Beim Eintragen erhöhte sich die Viskosität des Gemisches zunächst wieder stark, und das Gemisch trübte stark ein. Das Einsetzen des Deagglomerationsprozesses bewirkte wiederum einen raschen Abfall der Viskosität. Die Dispersion wurde solange gerührt, bis eine konstant niedrige Viskosität erreicht und die Trübung verschwunden war. Danach wurden Methanol und Methacrylat durch intensives Ausblasen mit Luft entfernt, bis die Restkonzentration von Methanol unter 10ppm und die Restkonzentration von Methacrylat unter 1 ppm lag. Die für das Ausblasen aufgewendete Zeit ist weit geringer als in Beispiel 1, da aufgrund der Verwendung teilkondensierter Produkte der erste Ausblasvorgang entfällt und insgesamt weniger Alkohole bzw. Alkylacrylate entstehen. Anschließend wurde die Dispersion in einer Perlmühle so lange gemahlen, bis eine konstant niedrige Viskosität erreicht war.

Die Rheologie entspricht im Wesentlichen derjenigen des Beispiels 1. Bei Schergeschwindigkeiten von 150s⁻¹ bis 400s⁻¹, wie sie typisch für eine Walzenapplikation sind, bleibt die Viskosität konstant. Die erfindungsgemäße Dispersion ist damit einfach applizierbar.

### Beispiel 3

Die gemäß Beispiel 1 mit den pyrogenen Kieselsäuren Aerosil OX 50, Aerosil 200 und Aerosil 380 hergestellten erfindungsgemäßen Dispersionen wurden in einem Partikelgrößen-Analysator auf ihre Partikelgrößenverteilung untersucht. Figur 4 zeigt das Ergebnis für die mit Aerosil 380 erhaltene Dispersion. Das Maximum liegt bei etwa 10nm bis 15nm. Tabelle 1 zeigt die erhaltenen Teilchengrößenverteilungen für alle drei Dispersionen.

**Tabelle 1**

| Pyrogene Kieselsäure (Hersteller: Evonik AG) | Mittlere Größe der Primärteilchen (Herstellerangabe) | Teilchengrößenverteilung 90% der Partikel kleiner als |
|---|---|---|
| Aerosil OX 50 | 40nm | 100nm |
| Aerosil 200 | 7nm | 80nm |
| Aerosil 380 | 7nm | 30nm |

Die Durchmesser der Siliziumdioxid-Partikel in allen drei Dispersionen betragen 100nm oder weniger. Die gemessene Partikelverteilung sagt aus, dass 90% aller Partikel einen kleineren Durchmesser besitzen als es der Wert in Tabelle 1 angibt.

### Beispiel 4

Eine erfindungsgemäße Dispersion gemäß dem Kondensationsansatz 2 aus Beispiel 1 mit 20 Gew.-% Aerosil 380 wurde durch Fluten mit einer Schichtdicke von 12µm auf eine transparente Polycarbonat-Scheibe aufgetragen und unter Inertgas mit UV-B-Strahlung ausgehärtet. Als Maß für die Transparenz der beschichteten Polycarbonatscheibe wurde die Trübung ("Haze") mit dem Gerät "Haze gard plus" der Fa. BYK-Gardner bestimmt. Aus fünf Messungen wurde ein Mittelwert der Trübung zu 0,2% ± 0,03% ermittelt.

## Patentansprüche

1. Verfahren zur Herstellung einer Dispersion mit nanoskaligen Siliziumdioxid-Partikeln aus pyrogenen Kieselsäuren in einem Lackbindemittel, **gekennzeichnet durch** die folgenden Verfahrensschritte:
(1) Vorlegen mindestens einer oligomeren und/oder polymeren Siloxanverbindung in mindestens einem flüssigen Lackbindemittel mit mindestens einem Reaktiwerdünner
(2) Eindispergieren mindestens einer pyrogenen Kieselsäure unter Rühren
(3) Rühren der Dispersion bis zum Erreichen einer konstanten Viskosität.

2. Verfahren nach Anspruch 1, **dadurch gekennzeichnet, dass** vor dem Schritt (1) die mindestens eine polyfunktionelle Siloxanverbindung durch sauer oder basisch katalysierte Kondensation mindestens einer funktionalisierten Alkoxysilanverbindung hergestellt und die bei der Kondensation entstehenden Alkohole und/oder Alkylacrylate vor dem Eindispergieren der mindestens einen pyrogenen Kieselsäure entfernt werden.

3. Verfahren nach Anspruch 2, **dadurch gekennzeichnet, dass** zur Herstellung der mindestens einen polyfunktionellen Siloxanverbindung mindestens eine Trialkoxysilanverbindung verwendet wird.

4. Verfahren nach Anspruch 2 oder 3, **dadurch gekennzeichnet, dass** die mindestens eine Alkoxysilanverbindung vollständig oder unvollständig umgesetzt wird.

5. Verfahren nach einem der vorhergehenden Ansprüche, **dadurch gekennzeichnet, dass** mindestens eine Siloxanverbindung mit einem Molekulargewicht von 500 bis 7.000 verwendet wird.

6. Verfahren nach Anspruch 5, **dadurch gekennzeichnet, dass** mindestens eine ringförmige Siloxanverbindung mit einem Durchmesser von 1 nm bis 3nm verwendet wird.

7. Verfahren nach einem der vorhergehenden Ansprüche, **dadurch gekennzeichnet, dass** als Lackbindemittel mindestens ein Acrylat und/oder Methacrylat verwendet wird.

8. Verfahren nach Anspruch 7, **dadurch gekennzeichnet, dass** als Lackbindemittel oligomere Urethan-, Polyester- und/oder Epoxyacrylate verwendet werden.

9. Verfahren nach einem der vorhergehenden Ansprüche, **dadurch gekennzeichnet, dass** als Reaktiwerdünner mono-, bi- und/oder multifunktionelle Acrylate verwendet werden.

10. Verfahren nach einem der vorhergehenden Ansprüche, **dadurch gekennzeichnet, dass** als Katalysator eine Dicarbonsäure und/oder ein Carbonsäureanhydrid verwendet wird.

11. Verfahren nach einem der vorhergehenden Ansprüche, **dadurch gekennzeichnet, dass** die mindestens eine pyrogene Kieselsäure mittels eines Scheibenrührers eindispergiert wird.

12. Verfahren nach einem der vorhergehenden Ansprüche, **dadurch gekennzeichnet, dass** die Dispersion im Anschluss an Schritt (3) gemahlen wird.

13. Dispersion mit nanoskaligen Siliziumdioxid-Partikeln aus pyrogenen Kieselsäuren in einem Lackbindemittel, herstellbar durch ein Verfahren nach einem der Ansprüche 1 bis 12.
